# EUROPEAN PATENT APPLICATION

(11) **EP 4 636 680 A1**
(43) Date of publication of application: **22.10.2025**
(21) Application number: 23903671.8
(22) Date of filing: 30.08.2023
(51) Int. Cl.: G06Q 50/12, A47J 27/14, A47J 47/01, A47J 36/32, G06Q 50/10, G06Q 10/08, G06K 19/06, G06K 7/14

(54) **AUTOMATIC COOKING APPARATUS**

(30) Priority: 14.12.2022 KR 20220174919; 29.08.2023 KR 20230113619
(71) Applicant: Mandarin Robotics, Inc., Yongin-si, Gyeonggi-do 16942 (KR)
(72) Inventor: KIM, Mingyu, Seoul 02057 (KR); PARK, Chunhyung, Seoul 03304 (KR)
(74) Representative: Abel & Imray LLP
(86) International application number: PCT/KR2023/012894
(87) International publication number: WO 2024/128467

(57) **Abstract**

An automatic cooking apparatus according to one embodiment may comprise: a worktop; a housing having at least a portion positioned below the worktop; a robotic wok; an interface, which is provided on the worktop and is operable by a user; and a control unit, which receives information from the interface, retrieves a pre-stored recipe based on the received information, and controls a first actuator and a second actuator based on the pre-stored recipe.

## Description

### TECHNICAL FIELD

The present disclosure relates to an automatic cooking apparatus.

### BACKGROUND ART

In Chinese cuisine, chefs typically use a wok, which is a large, bowl-shaped pot, to stir-fry or deep-fry various ingredients. When cooking with a wok, it is common practice to employ two motions. In a first motion, the chef tosses the ingredients by moving the wok back and forth while keeping the bottom of the wok in contact with the top surface of a burner. In a second motion, the chef rotates the wok with a snap of the wrist, to impart a smoky flavor to the food or to facilitate cooking when handling a large quantity of ingredients.

In recent years, efforts have been made to develop automatic cooking apparatuses capable of replicating these traditional wok movements. For example, Chinese Patent Publication No. CN 107595115 A discloses an automatic cooking device that attempts to simulate wok operations. However, the mechanism disclosed therein is rudimentary and lacks the sophistication required to cook a wide variety of dishes through a flexible combination of the aforementioned first and second motions.

The above description is information the inventor(s) acquired during the course of conceiving the present disclosure, or already possessed at the time, and was not necessarily publicly known before the present application was filed.

### DISCLOSURE OF THE INVENTION

### TECHNICAL GOALS

An embodiment provides an automatic cooking apparatus.

### TECHNICAL SOLUTIONS

According to an embodiment, an automatic cooking apparatus includes a worktop configured to support a burner; a housing, of which at least a portion is positioned below the worktop; a robotic wok including a first actuator that is positioned inside the housing and configured to generate power, a main body driven by the first actuator, a second actuator connected to the main body and configured to generate power, and a main head driven by the second actuator, of which at least a portion is exposed to the outside of the housing, and configured to support a wok; an interface provided on the worktop and operable by a user; and a control unit configured to receive information from the interface, retrieve a pre-stored recipe based on the received information, and configured to control the first actuator and the second actuator based on the pre-stored recipe.

According to an embodiment, an automatic cooking apparatus includes a worktop having an opening and configured to support a burner; a housing, of which at least a portion is positioned below the worktop; a robotic wok including a first actuator positioned inside the housing and configured to generate power, a main body driven by the first actuator, a second actuator connected to the main body and configured to generate power, and a main head driven by the second actuator, of which at least a portion is exposed to the outside of the housing, configured to support a wok, and extending through the opening; a control unit provided inside the housing and configured to control the first actuator and the second actuator; and a cover connected to the robotic wok and the worktop and configured to prevent foreign substances from entering the housing through the opening.

According to an embodiment, an automatic cooking apparatus includes a worktop configured to support a burner; a housing, of which at least a portion is positioned below the worktop; a robotic wok including a first actuator positioned inside the housing and configured to generate power, a main body driven by the first actuator, a second actuator connected to the main body and configured to generate power, and a main head driven by the second actuator, of which at least a portion is exposed to the outside of the housing, and configured to support a wok; a control unit provided inside the housing and configured to control the first actuator and the second actuator; and a pump connected to the housing and configured to guide external air into the housing.

According to an embodiment, an automatic cooking apparatus includes a worktop configured to support a burner; a housing, of which at least a portion is positioned below the worktop; a robotic wok including a first actuator positioned inside the housing and configured to generate power, a main body driven by the first actuator, a second actuator connected to the main body and configured to generate power, and a main head driven by the second actuator, of which at least a portion is exposed to the outside of the housing, and configured to support a wok; and a control unit provided inside the housing and configured to control the first actuator and the second actuator, in which the first actuator and the second actuator are positioned lower than a reference plane located 30 cm above the upper surface of the worktop.

In an embodiment, the automatic cooking apparatus may further include a back plate connected to the worktop; and a display unit connected to the back plate, controlled by the control unit, and providing visual information or auditory information to the outside.

In an embodiment, the automatic cooking apparatus may further include a third actuator spaced apart from the first actuator and the second actuator and configured to drive the main head.

In an embodiment, the automatic cooking apparatus may further include a recognizer provided on the worktop or in the housing.

In an embodiment, the first actuator and the second actuator may be positioned below the worktop.

In an embodiment, the control unit may identify a cooking step and may control the heat output of the burner based on the identified cooking step.

In an embodiment, the automatic cooking apparatus may further include a manual adjustment unit configured to switch the adjustment of heat output by the control unit to a manual mode.

In an embodiment, the automatic cooking apparatus may further include a temperature sensing unit provided on the worktop and configured to sense the temperature of a wok positioned over the burner.

In an embodiment, the automatic cooking apparatus may further include a back plate connected to the worktop; and a liquid supply unit connected to the back plate and configured to supply water and/or oil to the wok.

In an embodiment, the liquid supply unit may be rotatably connected to the back plate and may switch between a discharging position positioned in the same direction as the wok relative to the back plate and a standby position positioned in an opposite direction to the wok relative to the back plate.

### EFFECTS OF THE INVENTION

According to an embodiment, an automatic cooking apparatus may control a wok according to a set dish. For example, the automatic cooking apparatus may control the wok according to a cooking process and may implement a first motion and/or a second motion of the wok.

According to an embodiment, an automatic cooking apparatus may be configured to adjust flame intensity and to dispense water and/or oil according to a cooking process

According to an embodiment, an automatic cooking apparatus may assist a user in effective cooking by including a display unit that provides visual information or auditory information that induces an appropriate action of the user.

According to an embodiment, an automatic cooking apparatus positions a plurality of actuators below a worktop so that the plurality of actuators may avoid convection heat from a burner and may prevent contamination by ingredients or oil during cooking.

### BRIEF DESCRIPTION OF DRAWINGS

FIG. 1 is a block diagram schematically illustrating an automatic cooking apparatus according to an embodiment.
FIG. 2 is a perspective view of an automatic cooking apparatus according to an embodiment.
FIG. 3 is a front view of the automatic cooking apparatus according to an embodiment.
FIG. 4 is a perspective view of the automatic cooking apparatus according to an embodiment from an angle different from FIG. 2.
FIG. 5 is a perspective view of a robotic wok according to an embodiment.
FIG. 6 is a side view schematically illustrating the robotic wok according to an embodiment.
FIG. 7 is a side view schematically illustrating a first actuator driven, according to an embodiment.
FIG. 8 is a side view schematically illustrating a second actuator driven, according to an embodiment.
FIG. 9 is a plan view schematically illustrating a liquid supply unit in a standby position, according to an embodiment.
FIG. 10 is a plan view schematically illustrating the liquid supply unit in a discharging position, according to an embodiment.

### BEST MODE FOR CARRYING OUT THE INVENTION

Hereinafter, examples will be described in detail with reference to the accompanying drawings. The following description is one of several aspects of embodiments and the following description forms part of the detailed description of the embodiments. In describing an embodiment, a detailed description of a well-known function or configuration is omitted to clarify the present invention.

However, various alterations and modifications may be made to the embodiments. Here, the embodiments are not construed as limited to the disclosure. The embodiments should be understood to include all changes, equivalents, and replacements within the idea and the technical scope of the disclosure.

In addition, terms or words used in the present specification and claims should not be construed in general meanings or dictionary definitions, and based on a principle that the inventor may properly define the concept of terms to best describe their invention, the terms or words should be construed as meanings and concepts consistent with the technical idea of the invention according to an embodiment.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements. The same name may be used to describe an element included in the embodiments described above and an element having a common function. Unless otherwise mentioned, the descriptions on the embodiments may be applicable to the following embodiments and thus, duplicated descriptions will be omitted for conciseness.

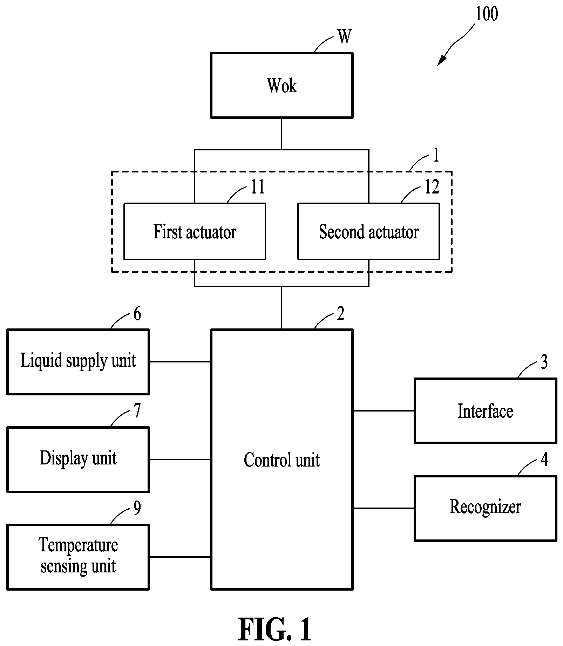

FIG. 1 is a block diagram schematically illustrating an automatic cooking apparatus according to an embodiment.

Referring to FIG. 1, an automatic cooking apparatus 100 may automatically perform cooking by controlling the manipulation of a wok W. For example, the automatic cooking apparatus 100 may drive the wok W with two or more motions. For example, the automatic cooking apparatus 100 may implement a first motion that causes the wok W to move back and forth greatly and a second motion that bounces the wok W. If there is a food material in the wok W, the food material may be flipped over while the wok W is in the first motion. If there are food materials in the wok W, the food materials may be evenly mixed while the wok W is in the second motion.

The automatic cooking apparatus 100 may include a robotic wok 1 including a first actuator 11 and a second actuator 12 for controlling the wok W, a control unit 2 for controlling the first actuator 11 and the second actuator 12, an interface 3 that recognizes an input signal from a user, a recognizer 4 that recognizes code displayed on an object, a material supply unit 6 for supplying liquid to the wok W, a display unit 7 that provides visual or auditory information to the outside, and a temperature sensing unit 9 for sensing the temperature of the wok W.

The robotic wok 1 may drive the wok W. In the present disclosure, a wok includes all cooking utensils, such as a pan or a pot, having a handle and an accommodating part. The robotic wok 1 may drive the wok W with a plurality of motions. The robotic wok 1 may include the first actuator 11 for driving the wok W with the first motion and the second actuator 12 for driving the wok W with the second motion.

The control unit 2 may store various pieces of recipe information. The control unit 2 may recognize information received from the interface 3 and may retrieve recipe information corresponding to the information. The control unit 2 may drive the robotic wok 1 based on the recipe information. The control unit 2 may receive information from the interface 3, may retrieve pre-stored recipe information based on the received information, and may control the first actuator 11 and the second actuator 12 based on the pre-stored recipe.

The interface 3 may include, for example, a display. The user may select a desired dish by selecting a button displayed on the display. For example, the display may display lists of dishes. For example, an interface may include a button that may be manipulated by the user. For example, the interface may include a touchable display.

The recognizer 4 may recognize code displayed on an object. For example, the object may be a container containing food materials. For example, the code may be a QR code. The recognizer 4 may be electrically connected to the control unit 2. When the recognizer 4 recognizes the QR code, the control unit 2 may recognize information about a dish corresponding to a food material corresponding thereto.

The material supply unit 6 may supply water and/or oil or seasoning to the wok W. For example, the material supply unit 6 may supply water and/or oil or seasoning into the wok W at an appropriate time during a cooking process. The material supply unit 6 may include a liquid supply unit 61 for supplying liquid to the wok W and a water supply unit 62 for manually supplying water. When the user needs to add water separately to the wok W as needed, the water supply unit 62 may be used to supply water to the wok W.

The display unit 7 may provide appropriate visual or auditory information to the user during the cooking process. For example, when a certain food material needs to be put into the wok W during cooking, an orange light may be displayed, or an alarm sound may be generated to prompt the user to take action.

The temperature sensing unit 9 may sense the temperature of the wok W during the cooking process. For example, the temperature sensing unit 9 may include a temperature sensor.

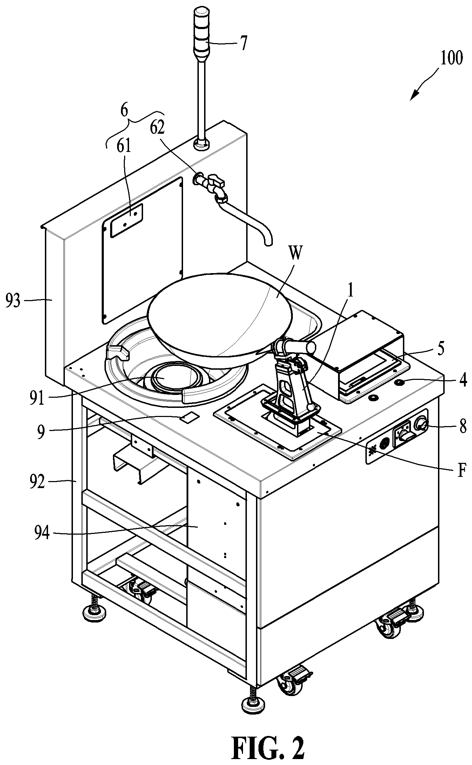

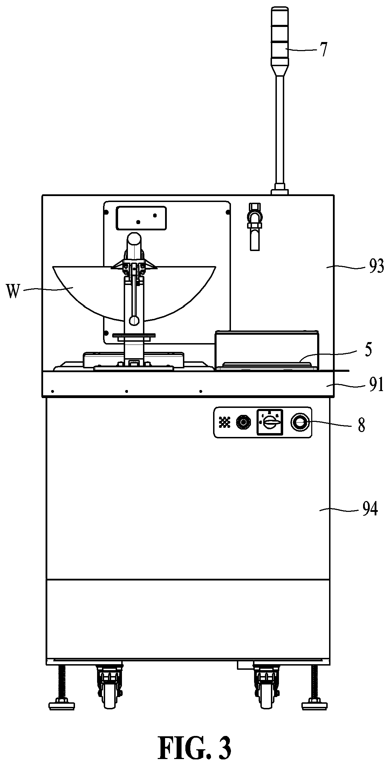

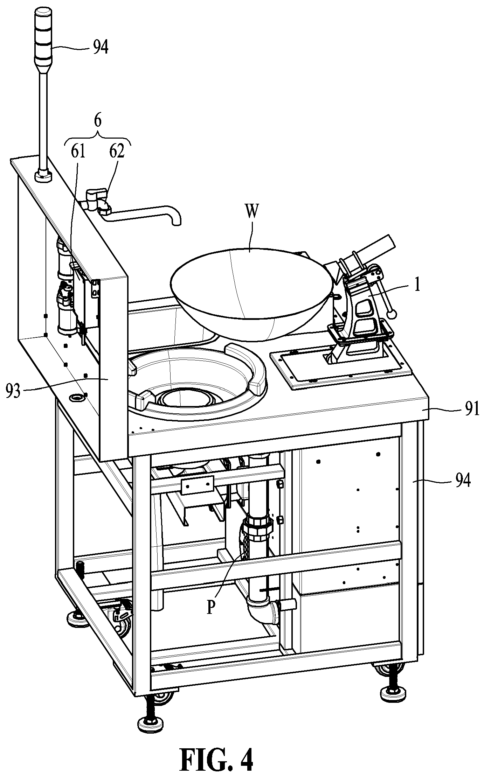

FIG. 2 is a perspective view of an automatic cooking apparatus according to an embodiment, FIG. 3 is a front view of the automatic cooking apparatus according to an embodiment, and FIG. 4 is a perspective view of the automatic cooking apparatus according to an embodiment from an angle different from FIG. 2.

Referring to FIGS. 2 to 4, the automatic cooking apparatus may include a worktop 91 supporting a burner, a support frame 92, a back plate 93, a housing 94, a robotic wok 1 for driving a wok W, a control unit (not shown) (e.g., the control unit 2 of FIG. 1) provided inside the housing 94, a recognizer 4, an interface 5, a material supply unit 6, a display unit 7, a manual control unit 8, a temperature sensing unit 9, a pump P, and a cover F.

The worktop 91 may support the burner. The burner may be provided on one side of the worktop 91. The burner may heat the wok W. The worktop 91 may include the recognizer 4, the interface 5, and the temperature sensing unit 9. The worktop 91 may include an opening. The robotic wok 1 may pass through the opening.

The support frame 92 may support the worktop 91. The support frame 92 may support the worktop 91 so that the worktop 91 may be positioned up from the ground. The support frame 92 may include a plurality of loads.

The back plate 93 may be connected to the worktop 91. The back plate 93 may be positioned up from the worktop 91. The material supply unit 6 may be provided on the back plate 93. The display unit 7 may be provided on the back plate 93. The housing 94 may be positioned lower than the worktop 91. The housing 94 may accommodate a control unit. The housing 94 may accommodate at least a portion of the robotic wok 1. The housing 94 may include a hollow inside. The pump P may be provided on one side of the housing 94, and a ventilation hole for discharging air may be provided on the other side. In this case, a housing may be configured so that air is naturally discharged through openings or gaps in the housing without a separate ventilation hole.

The robotic wok 1 may drive the wok W. The robotic wok 1 may manipulate the wok W with a plurality of motions. Most of the robotic wok 1 is positioned inside the housing 94, and some may be exposed to the outside of the housing 94.

The control unit (not shown) (e.g., the control unit 2 of FIG. 1) may be provided inside the housing 94. The control unit may control the robotic wok 1. The control unit may control at least one of the first actuator 11 and the second actuator 12. The control unit may receive information from the recognizer 4, the interface 5, and/or the temperature sensing unit 9. The control unit may transmit information to the interface 5 and the display unit 7.

The recognizer 4 may be provided on the worktop 91. The recognizer 4 may recognize code displayed on a food material container.

The interface 5 may be manipulated by a user. The interface 5 may sense the user's manipulation signal and may transmit the signal to the control unit. The control unit may display cooking information to the user through the interface 5.

The material supply unit 6 may include a liquid supply unit 61 and a water supply unit 62.

The display unit 7 may output visual information and auditory information to the outside. The display unit 7 may provide an operation start signal to the user so that the user may perform an appropriate action during a cooking process. For example, during the cooking process, a display unit may output a signal when the user's action is required. For example, the display unit may remain blue during automatic cooking, and then the color may turn into orange when the user's action is required. Once the action is done, the user may manipulate an interface.

The manual control unit 8 may switch the heat output control state of the burner from an automatic mode to a manual mode or from a manual mode to an automatic mode. For example, when the user does not perform any manipulation, the heat output of the burner may be automatically adjusted.

The temperature sensing unit 9 may sense the temperature of the wok W. The temperature sensing unit 9 may include a temperature sensor. The temperature sensor may be, for example, an infrared temperature sensor.

The pump P may guide external air into the housing 94. The pump P may inject external air into the inside of the housing 94. The pump P may include a motor. In the present disclosure, a pump includes various types of air pumps or fan-type blowers. The pump P may increase pressure in a hollow inside the housing 94. The pump P may help prevent foreign substances from unintentionally entering the housing 94 by maintaining high pressure inside the housing 94.

The cover F may connect the robotic wok 1 to the worktop 91. For example, the cover F may prevent foreign substances from entering the housing 94 through an opening. For example, the cover F may include fabric or rubber. The cover F may have an elastic material. In addition, the cover F may have a foldable structure or a bellows shape. The cover F may be detachably provided on the robotic wok 1 and the worktop 91.

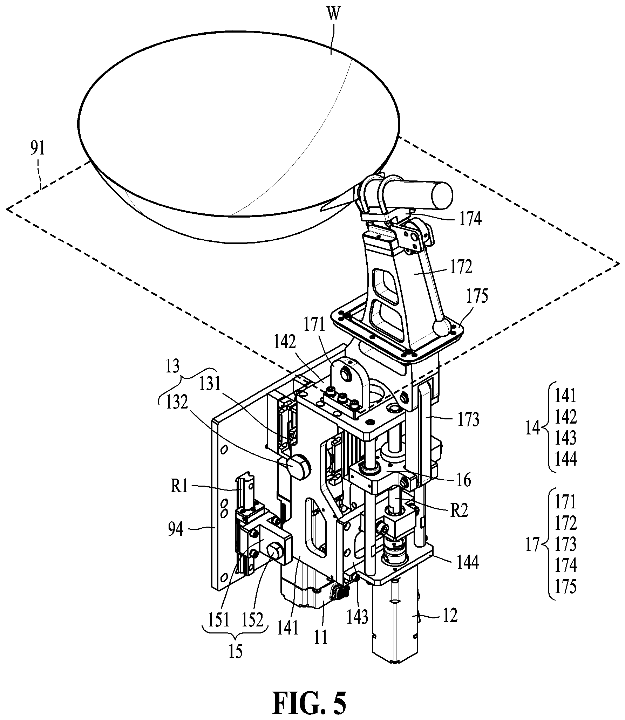

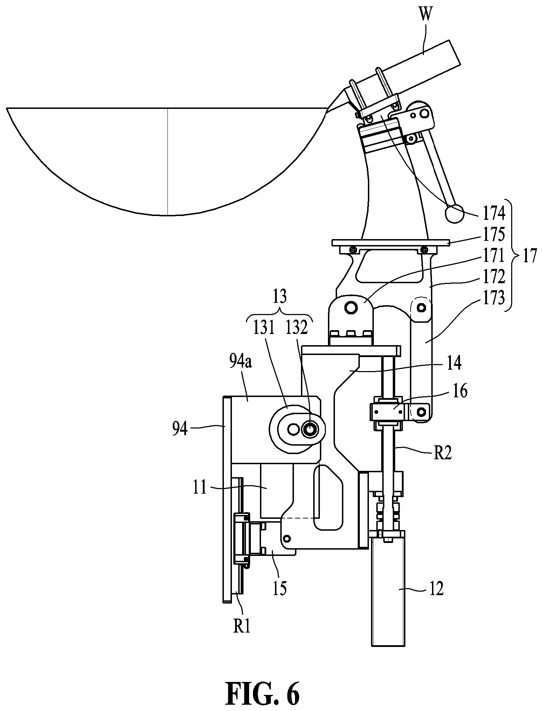

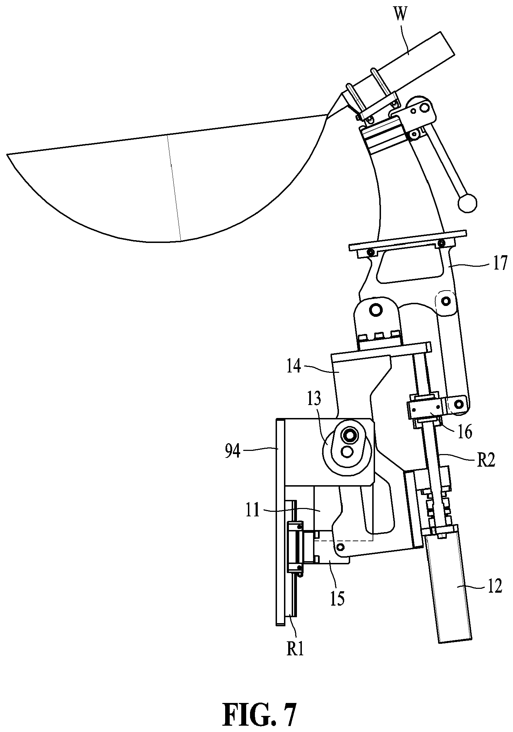

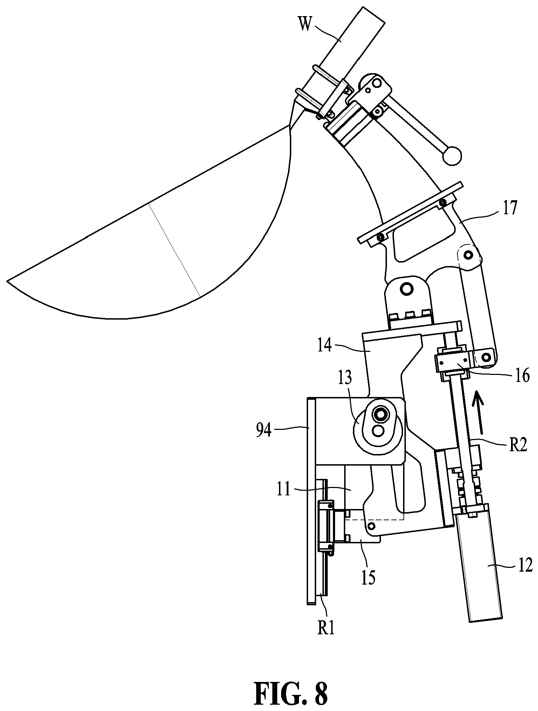

FIG. 5 is a perspective view of a robotic wok according to an embodiment. FIG. 6 is a side view schematically illustrating the robotic wok according to an embodiment. FIG. 7 is a side view schematically illustrating a first actuator driven, according to an embodiment. FIG. 8 is a side view schematically illustrating a second actuator driven, according to an embodiment.

Referring to FIGS. 5 to 8, the robotic wok (e.g., the robotic wok 1 of FIG. 2) may drive a wok W. The robotic wok may drive the wok W with a first motion and a second motion. The robotic wok may be connected to the housing 94. The robotic wok may include a first actuator 11, a second actuator 12, a rotation plate 13, a main body 14, a main rail R1, a main slider 15, a sub-rail R2, a sub-slider 16, and a main head 17.

The first actuator 11 may generate power to drive the wok W with the first motion. The first actuator 11 may include a motor. The first actuator 11 may be fixed to the housing 94. The housing 94 may include a housing arm 94a for supporting the first actuator 11. The first actuator 11 may rotate the rotation plate 13.

The second actuator 12 may generate power to drive the wok W with the second motion. The second actuator 12 may include a motor. The second actuator 12 may be fixed to the main body 14. The second actuator 12 may drive the sub-slider 16. The sub-slider 16 may slide along the sub-rail R2 by receiving power from the second actuator 12. The power output from the second actuator 12 may be transmitted to the main head 17.

The rotation plate 13 may be driven by the first actuator 11. The rotation plate 13 may rotate. The rotation plate 13 may be connected to an output end of the first actuator 11. For example, an axial conversion gear may be provided between the output end of the first actuator 11 and the rotation plate 13. For example, a bevel gear may be provided between the output end of the first actuator 11 and the rotation plate 13. The rotation plate 13 may include a rotation plate body 131 and a rotation plate head 132 provided at a position spaced apart from a rotation axis of the rotation plate body 131. The rotation plate head 132 may be connected to the main body 14.

The main body 14 may be connected to a rotation plate head 132 on one side and may be connected to the main slider 15 on the other side. The main body 14 may be rotatably connected to the rotation plate head 132. The main body 14 may be rotatably connected to the main slider 15. While the main body 14 moves by rotation on the rotation plate 13, the main slider 15 may slide along the main rail R1. The main body 14 may include a body side plate 141 connected to the rotation plate 13 and the main slider 15, a body upper surface plate 142 connected to one side of the body side plate 141 and supports the main head 17, a main support plate 143 connected to the other side of the body side plate 141, and a main extension plate 144 that extends from the main support plate 143 and supports the second actuator 12. The sub-rail R2 may be provided between the main upper surface plate 142 and the main extension plate 144.

The main rail R1 may be connected to the housing 94. The main rail R1 may guide the movement of the main slider 15. The main slider 15 may slide along the main rail R1.

The sub-rail R2 may be provided on the main body 14. For example, the sub-rail R2 may include a plurality of shafts. The sub-rail R2 may support the sub-slider 16.

The sub-slider 16 may be driven by the second actuator 12. The sub-slider 16 may move along the sub-rail R2.

The main head 17 may be connected to the main body 14 on one side and may be connected to the sub-slider 16 on the other side. For example, the main head 17 may move according to the movement of the main body 14 and at the same time may move according to the movement of the sub-slider 16. The main head 17 may include a main support plate 171, a head body 172, a head link 173, a head gripper 174, and a head auxiliary plate 175.

The main support plate 171 may be fixed to the main body 14. The main support plate 171 may be integrally fixed to the main body 14. Main support plates 171 may be provided as a pair on the opposite side relative to the head body 172. A pair of main support plates 171 may rotatably support the head body 172.

The head body 172 may rotatably support the main support plate 171.

The head link 173 may be rotatably connected to the head body 172 at one end and may be rotatably connected to the sub-slider 16 at the other end.

The head gripper 174 may be connected to the head body 172 and may support the wok W. In the present embodiment, the head gripper 174 supports and fixes a handle of a wok. However, the main head 17 may be configured to fix both sides of the wok. Or a wok cradle in which the wok is seated may be additionally provided, and a portion of the wok cradle may be fixed to the main head 17. The head auxiliary plate 175 may be connected to one side of the head body 172. The head auxiliary plate 175 may support a cover (e.g., the cover F of FIG. 2). For example, an outer edge of the cover may be connected to a worktop (e.g., the worktop 91 of FIG. 2), and the inner edge may be connected to the head auxiliary plate 175.

When the second actuator 12 operates, the sub-slider 16 may slide along the sub-rail R2, the sub-slider 16 may push or pull the head link 173, and the head link 173 may rotate the head body 172 relative to the head support plate 171.

The first actuator 11 and the second actuator 12 may be positioned lower than a reference plane located 30 cm above the upper surface of the worktop (e.g., the worktop 91 of FIG. 2) to avoid the influence of strong convection heat flowing from a burner to the wok as much as possible and facilitate the work of a kitchen worker on the worktop. For example, at least a portion of the first actuator 11 and the second actuator 12 may extend through the opening, but the position may be lower than the reference plane located 30 cm above the upper surface of the worktop (e.g., the worktop 91 of FIG. 2). For example, the first actuator 11 or the second actuator 12 may be positioned approximately 20 cm up from the upper surface of the worktop. The first actuator 11 and the second actuator 12 may be covered by the cover. The first actuator 11 and the second actuator 12 may be positioned lower than the worktop.

Although not shown, it should be noted that a third actuator (not shown) for driving the main head 17 with a motion different from that of the first actuator 11 and the second actuator 12 may be additionally provided. For example, the third actuator may stir the wok W from side to side.

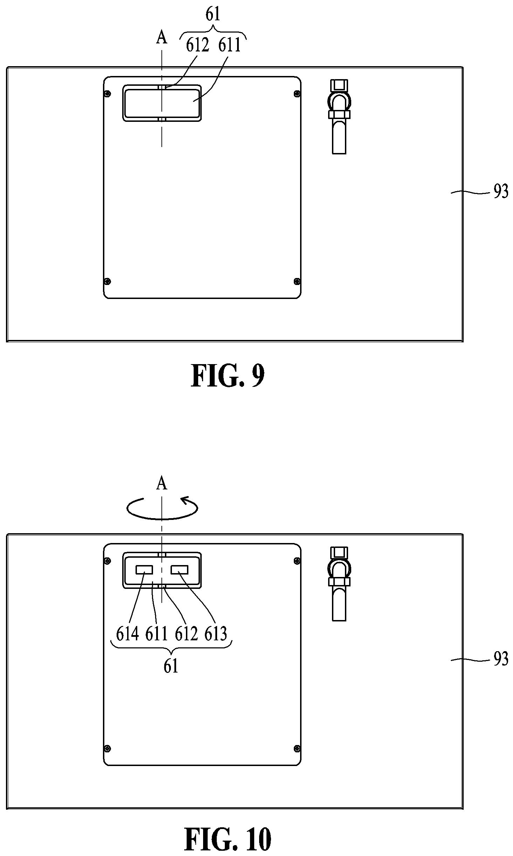

FIG. 9 is a plan view schematically illustrating a liquid supply unit in a standby position, according to an embodiment. FIG. 10 is a plan view schematically illustrating the liquid supply unit in a discharging position, according to an embodiment.

Referring to FIGS. 9 and 10, a liquid supply unit 61 may be rotatably connected to a back plate 93. The liquid supply unit 61 may include a supply plate 611, a supply shaft 612, a first liquid nozzle 613, and a second liquid nozzle 614. The supply plate 611 may be rotatably connected to the back plate 93. The supply plate 611 may switch between the discharging position positioned in the same direction as a wok (e.g., the wok W of FIG. 2) relative to the back plate 93, and the standby position positioned in the opposite direction to the wok relative to the back plate 93. For example, when no liquid supply is required, a nozzle may be positioned on the opposite side of the wok to prevent the nozzle from being contaminated by prolonged exposure to heat.

The supply shaft 612 may be connected to the back plate 93 and may rotatably support the supply plate 611.

The first liquid nozzle 613 may be connected to the supply plate 611 and may supply first liquid to the wok. The second liquid nozzle 614 may be connected to the supply plate 611 and may supply second liquid to the wok. The second liquid nozzle 614 may be spaced apart from the first liquid nozzle 613.

As described above, the embodiment has been described with reference to specific matters such as specific components and limited embodiments and drawings, but these are provided to help the overall understanding. Also, the present disclosure is not limited to the above-described embodiments, and various modifications and variations are possible from these descriptions by those skilled in the art to which the present disclosure pertains. Accordingly, the scope of the present disclosure is defined not by the detailed description, but by the claims and their equivalents, and all variations within the scope of the claims and their equivalents are to be construed as being included in the disclosure.

## Claims

1. An automatic cooking apparatus comprising:
a worktop configured to support a burner;
a housing, of which at least a portion is positioned below the worktop;
a robotic wok comprising a first actuator positioned inside the housing and configured to generate power, a main body driven by the first actuator, a second actuator connected to the main body and configured to generate power, and a main head driven by the second actuator, of which at least a portion is exposed to the outside of the housing, and configured to support a wok;
an interface provided on the worktop and operable by a user; and
a control unit configured to receive information from the interface, retrieve a pre-stored recipe based on the received information, and configured to control the first actuator and the second actuator based on the pre-stored recipe.

2. An automatic cooking apparatus comprising:
a worktop having an opening and configured to support a burner;
a housing, of which at least a portion is positioned below the worktop;
a robotic wok comprising a first actuator positioned inside the housing and configured to generate power, a main body driven by the first actuator, a second actuator connected to the main body and configured to generate power, and a main head driven by the second actuator, of which at least a portion is exposed to the outside of the housing, configured to support a wok, and extending through the opening;
a control unit provided inside the housing and configured to control the first actuator and the second actuator; and
a cover connected to the robotic wok and the worktop and configured to prevent foreign substances from entering the housing through the opening.

3. An automatic cooking apparatus comprising:
a worktop configured to support a burner;
a housing, of which at least a portion is positioned below the worktop;
a robotic wok comprising a first actuator positioned inside the housing and configured to generate power, a main body driven by the first actuator, a second actuator connected to the main body and configured to generate power, and a main head driven by the second actuator, of which at least a portion is exposed to the outside of the housing, and configured to support a wok;
a control unit provided inside the housing and configured to control the first actuator and the second actuator; and
a pump connected to the housing and configured to guide external air into
the housing.

4. An automatic cooking apparatus comprising:
a worktop configured to support a burner;
a housing, of which at least a portion is positioned below the worktop;
a robotic wok comprising a first actuator positioned inside the housing and configured to generate power, a main body driven by the first actuator, a second actuator connected to the main body and configured to generate power, and a main head driven by the second actuator, of which at least a portion is exposed to the outside of the housing, and configured to supports a wok; and
a control unit provided inside the housing and configured to control the first actuator and the second actuator,
wherein the first actuator and the second actuator are positioned lower than a reference plane located 30 cm above the upper surface of the worktop.

5. The automatic cooking apparatus of claim 1, further comprising:
a back plate connected to the worktop; and
a display unit connected to the back plate, controlled by the control unit, and configured to provide visual information or auditory information to the outside.

6. The automatic cooking apparatus of any one of claims 1 to 4, further comprising:
a third actuator spaced apart from the first actuator and the second actuator and configured to drive the main head.

7. The automatic cooking apparatus of any one of claims 1 to 4, further comprising:
a recognizer provided on the worktop or in the housing.

8. The automatic cooking apparatus of claim 4, wherein the first actuator and the second actuator are positioned below the worktop.

9. The automatic cooking apparatus of any one of claims 1 to 4, wherein the control unit is configured to identify a cooking step and is configured to control the heat output of the burner based on the cooking step.

10. The automatic cooking apparatus of claim 9, further comprising:
a manual adjustment unit configured to switch the adjustment of heat output by the control unit to a manual mode.

11. The automatic cooking apparatus of any one of claims 1 to 4, further comprising:
a temperature sensing unit provided on the worktop and configured to sense a temperature of a wok positioned over the burner.

12. The automatic cooking apparatus of any one of claims 1 to 4, further comprising:
a back plate connected to the worktop; and
a liquid supply unit connected to the back plate and configured to supply water and/or oil to the wok.

13. The automatic cooking apparatus of claim 12, wherein
the liquid supply unit is rotatably connected to the back plate and configured to switch between a discharging position positioned in the same direction as the wok relative to the back plate and a standby position positioned in an opposite direction to the wok relative to the back plate.
